# EUROPÄISCHE PATENTSCHRIFT

(11) **EP 0 910 515 B1**
(45) Veröffentlichungstag und Bekanntmachung des Hinweises auf die Patenterteilung: **11.04.2001**
(21) Anmeldenummer: 97931759.1
(22) Anmeldetag: 03.07.1997
(51) Int. Cl.: B60K 15/03

(54) **KRAFTSTOFFBEHÄLTER UND VERFAHREN ZU SEINER HERSTELLUNG**
FUEL TANK AND PROCESS FOR THE PRODUCTION THEREOF
RESERVOIR DE CARBURANT ET SON PROCEDE DE FABRICATION

(30) Priorität: 10.07.1996 DE 19627742
(43) Veröffentlichungstag der Anmeldung: 28.04.1999
(73) Patentinhaber: Mannesmann VDO Aktiengesellschaft, 60388 Frankfurt am Main (DE)
(72) Erfinder: KELLER, Dieter, D-63743 Aschaffenburg (DE)
(74) Vertreter: Klein, Thomas, Dipl.-Ing. (FH)
(86) Internationale Anmeldenummer: EP9703511
(87) Internationale Veröffentlichungsnummer: WO9801315

(56) Entgegenhaltungen:
- EP-A- 0 064 310
- US-A- 4 453 564
- US-A- 4 526 286
- Patent Abstracts of Japan, Band 15, Nr 73(M-1084); & JP,A,02296537 (NISSAN MOTOR CO LTD), 1990-12-07

## Beschreibung

Die Erfindung betrifft einen Kraftstoffbehälter aus Kunststoff mit einem Boden und einer oberen Abschlußwand gemäß dem Oberbegriff des Anspruchs 1. Weiterhin betrifft die Erfindung ein Verfahren zu Herstellung eines solchen Kraftstoffbehälters gemäß dem Oberbegriff des Anspruchs 5.

Ein Kraftstoffbehälter und ein Verfahren dieser Art sind aus dem Dokument US-A-4,453,564 bekannt.

Die in Kraftfahrzeugen benutzten Kraftstoffbehälter aus Kunststoff werden derzeit im Blasverfahren hergestellt. Dadurch können solche Kraftstoffbehälter zwar kostengünstig erzeugt, jedoch müssen relativ große Toleranzabweichungen hingenommen werden. Besonders nachteilig ist es, wenn der Abstand zwischen dem Boden und der oberen Abschlußwand bei Kraftstoffbehältern einer Serie unterschiedlich ist, weil dann bei der Ermittlung des Füllvolumens entsprechende Abweichungen auftreten können. Auch die Montage von im Kraftstoffbehälter erforderlichen Einbauteilen bereitet bei im Blasverfahren hergestellten Kraftstoffbehältern Schwierigkeiten, weil diese Einbauteile durch einen im Querschnitt relativ engen Einlaßstutzen oder eine Montageöffnung eingeführt werden müssen.

Der Erfindung liegt das Problem zugrunde, einen Kraftstoffbehälter der eingangs genannten Art so zu gestalten, daß in ihm Einbauteile möglichst einfach eingebaut und möglichst enge Toleranzen beim Abstand zwischen seiner oberen Abschlußwand und dem Boden eingehalten werden können. Weiterhin soll ein Verfahren zur Herstellung eines solchen Kraftstoffbehälters gefunden werden.

Das erstgenannte Problem wird erfindungsgemäß dadurch gelöst, daß der Kraftstoffbehälter durch Zusammenschweißen einer die obere Abschlußwand aufweisenden, oberen Kunststoffschale und einer den Boden bildenden, unteren Kunststoffschale erzeugt ist, daß die beiden Kunststoffschalen im Spritzgießverfahren hergestellt wurden und daß zur Einhaltung eines genauen Abstandes zwischen der oberen Abschlußwand und dem Boden im Kraftstoffbehälter im Bereich der Schweißnaht beim Schweißen auf Anschlag gehende Abstandshalter vorgesehen sind.

In einem solchen Kraftstoffbehälter kann man Einbauteile vor dem Spritzgießen in ihrer Endposition einformen, so daß der nachträgliche, schwierige Einbau durch einen Einfüllstutzen oder eine Montageöffnung entfällt. Die Abstandshalter ermöglichen es, die Kunststoffschalen beim Schweißen stets genau gleich weit aufeinander zu drücken, so daß sich unabhängig von Fertigungstoleranzen stets gleiche Abstände zwischen dem Boden und der oberen Abschlußwand ergeben, was für eine genaue Bestimmung des Füllvolumens vorteilhaft ist.

Die Abstandshalter können kostengünstig in einem Arbeitsgang mit der Herstellung der Kunststoffschalen erzeugt werden, wenn die Abstandshalter an der oberen Kunststoffschale und/oder der unteren Kunststoffschale angeformt sind.

Alternativ ist es jedoch auch möglich, daß die Abstandshalter als separate, vor dem Zusammenschweißen der Kunststoffschalen in sie einsetzbare Bauteile ausgebildet sind.

Die Kunststoffschalen sind beim Schweißen zwangsläufig genau zueinander ausgerichtet, wenn gemäß einer anderen Weiterbildung der Erfindung die Abstandshalter zum formschlüssigen Verbinden der Kunststoffschalen ausgebildet sind.

Die zweitgenannte Aufgabe, nämlich die Schaffung eines Verfahrens zur Herstellung eines Kraftstoffbehälters mit den vorgenannten Merkmalen, wird erfindungsgemäß dadurch gelöst, daß anschließend die Kunststoffschalen unter Zwischenschaltung eines Heizelementes im Bereich eines umlaufenden Schweißrandes jeder Kunststoffschale aufeinandergesetzt und dann die Schweißränder mittels des Heizelementes erwärmt werden, daß nach dem Erwärmen der Schweißränder die Heizelemente entfernt und dann die Kunststoffschalen so weit gegeneinander gedrückt werden, bis im Kraftstoffbehälter angeordnete Abstandshalter auf Anschlag gelangt sind.

Ein solcher Kraftstoffbehälter ist sehr kostengünstig herstellbar und erlaubt es, Einbauteile schon bei der Herstellung des Kraftstoffbehälters im Kunststoff zu positionieren. Durch die Abstandshalter können die Kunststoffschalen durch Druckschweißen miteinander verbunden werden.

Das Zusammenschweißen der Kunststoffschalen kann auf an sich übliche Weise zuverlässig erfolgen, wenn die Schweißränder der Kunststoffschalen jeweils durch einen nach außen gerichteten, flanschartigen Rand gebildet sind und wenn zum Zusammendrücken der Kunststoffschalen eine Zange über die beiden aufeinanderliegenden, flanschartigen Ränder greift.

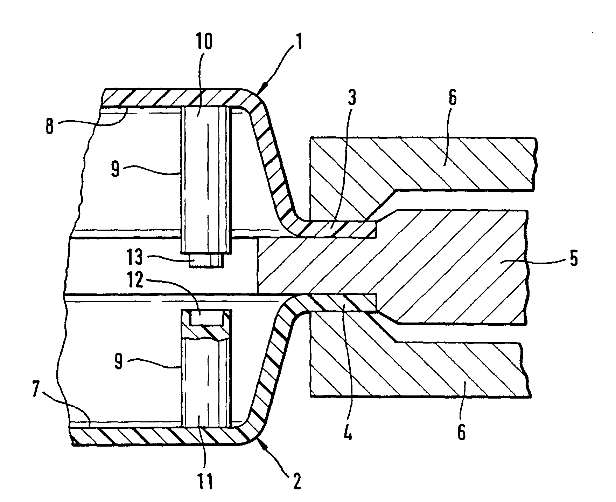

Die Erfindung läßt zahlreiche Ausführungsformen zu. Zur weiteren Verdeutlichung ihres Grundprinzips ist in der Zeichnung ein Randbereich eines Kraftstoffbehälters während der Fertigungsphase gezeigt und wird nachfolgend beschrieben.

Der in der Zeichnung dargestellte Kraftstoffbehälter besteht aus einer oberen Kunststoffschale 1 und einer unteren Kunststoffschale 2, welche im Spritzgießverfahren hergestellt sind und in die nicht gezeigte Einbauteile integriert sein können. Beide haben einen flanschartig nach außen gerichteten Rand 3, 4. In der dargestellten Position befindet sich zwischen diesen Rändern 3, 4 ein Heizelement 5. Mit ihm wärmt man den Kunststoff im Bereich der Ränder 3, 4 so lange auf, bis er teigig ist, zieht dann das Heizelement 5 zurück und drückt die Ränder 3, 4 anschließend beispielsweise mit einer Zange 6 zusammen, so daß die Ränder 3, 4 miteinander verschweißen. Bei dem als Zange 6 gezeigten Bauteil kann es sich auch um eine weitere Heizeinrichtung handeln. Das Zusammendrücken kann auch mit einer anders gestalteten Zange oder auf gänzlich andere Weise erfolgen.

Wichtig für die Erfindung ist die genaue Einhaltung des Abstandes der Kunststoffschalen 1, 2 zueinander, damit ein Boden 7 der unteren Kunststoffschale 2 genauen Abstand von einer oberen Abschlußwand 8 der oberen Kunststoffschale 1 erhält. Hierzu dient ein Abstandshalter 9, welcher beim Zusammenschweißen der Kunststoffschalen 1, 2 sich gegenseitig berühren. Bei dem gezeigten Ausführungsbeispiel besteht der Abstandshalter 9 aus einem an der oberen Kunststoffschale 1 angeformten, nach unten ragenden Stempel 10 und einem an der unteren Kunststoffschale 2 angeformten, nach oben gerichteten Stempel 11. Der Stempel 11 hat in seiner Stirnseite eine Ausnehmung 12, in die ein Zapfen 13 der unteren Stirnseite des oberen Stempels 10 paßt. Im fertiggestellten Zustand greift der Zapfen 13 formschlüssig in die Ausnehmung 12 ein.

## Patentansprüche

1. Kraftstoffbehälter aus Kunststoff mit einem Boden und einer oberen Abschlußwand, wobei er durch Zusammenschweißen einer die obere Abschlußwand (8) aufweisenden, oberen Kunststoffschale (1) und einer den Boden (7) bildenden, unteren Kunststoffschale (2) erzeugt ist, und wobei die beiden Kunststoffschalen (1, 2) im Spritzgießverfahren hergestellt wurden, **dadurch gekennzeichnet**, daß zur Einhaltung eines genauen Abstandes zwischen der oberen Abschlußwand (8) und dem Boden (7) im Kraftstoffbehälter im Bereich der Schweißnaht beim Schweißen auf Anschlag gehende Abstandshalter (9) vorgesehen sind.

2. Kraftstoffbehälter nach Anspruch 1, **dadurch gekennzeichnet**, daß die Abstandshalter (9) an der oberen Kunststoffschale (1) und/oder der unteren Kunststoffschale (2) angeformt sind.

3. Kraftstoffbehälter nach den Ansprüchen 1 oder 2, **dadurch gekennzeichnet,** daß die Abstandshalter (9) als separate, vor dem Zusammenschweißen der Kunststoffschalen (1, 2) in sie einsetzbare Bauteile ausgebildet sind.

4. Kraftstoffbehälter nach zumindest einem der vorangehenden Ansprüche, **dadurch gekennzeichnet,** daß die Abstandshalter (9) zum formschlüssigen Verbinden der Kunststoffschalen (1, 2) ausgebildet sind.

5. Verfahren zur Herstellung eines Kraftstoffbehälters, wobei zunächst eine obere Kunststoffschale (1) und eine untere Kunststoffschale (2) im Spritzgießverfahren hergestellt werden, **dadurch gekennzeichnet,** daß anschließend die Kunststoffschalen (1, 2) unter Zwischenschaltung eines Heizelementes (5) im Bereich eines umlaufenden Schweißrandes jeder Kunststoffschale (1, 2) aufeinandergesetzt und dann die Schweißränder mittels des Heizelementes (5) erwärmt werden, daß nach dem Erwärmen der Schweißränder die Heizelemente (5) entfernt und dann die Kunststoffschalen (1, 2) so weit gegeneinander gedrückt werden, bis im Kraftstoffbehälter angeordnete Abstandshalter (9) auf Anschlag gelangt sind.

6. Verfahren nach Anspruch 5, **dadurch gekennzeichnet,** daß die Schweißränder der Kunststoffschalen (1, 2) jeweils durch einen nach außen gerichteten, flanschartigen Rand (3, 4) gebildet sind und daß zum Zusammendrücken der Kunststoffschalen eine Zange (6) über die beiden aufeinanderliegenden, flanschartigen Ränder (3, 4) greift.

## Claims

1. Plastic fuel tank with a bottom and with an upper closing wall, it being produced by welding together an upper plastic shell (1) having the upper closing wall (8) and a lower plastic shell (2) forming the bottom (7), and the two plastic shells (1, 2) having been produced by the injection-moulding method, characterized in that, in order to adhere to an exact distance between the upper closing wall (8) and the bottom (7), spacers (9) coming into abutment during the welding operation are provided in the fuel tank in the region of the weld seam.

2. Fuel tank according to Claim 1, characterized in that the spacers (9) are integrally formed on the upper plastic shell (1) and/or the lower plastic shell (2) .

3. Fuel tank according to Claims 1 or 2, characterized in that the spacers (9) are designed as separate components which can be inserted into the plastic shells (1, 2) before these are welded together.

4. Fuel tank according to at least one of the preceding claims, characterized in that the spacers (9) are designed for the positive connection of the plastic shells (1, 2).

5. Method for producing a fuel tank, first, an upper plastic shell (1) and a lower plastic shell (2) being produced by the injection-moulding method, characterized in that, subsequently, the plastic shells (1, 2) are placed one on the other, with a heating element (5) being interposed in the region of a peripheral welding edge of each plastic shell (1, 2), and the welding edges are then heated by means of the heating element (5), and characterized in that, after the welding edges have been heated, the heating elements (5) are removed and the plastic shells (1, 2) are then pressed one towards the other until spacers (9) arranged in the fuel tank have come into abutment.

6. Method according to Claim 5, characterized in that the welding edges of the plastic shells (1, 2) are each formed by a flange-like edge (3, 4) directed outwards, and in that, in order to press the plastic shells together, a gripper (6) engages over the two flange-like edges (3, 4) resting one on the other.

## Revendications

1. Réservoir de carburant en plastique avec un fond et une paroi de fermeture supérieure, fabriqué par soudure l'une à l'autre d'une coque en plastique supérieure (1) incluant la paroi de fermeture supérieure (8) et une coque en plastique inférieure (2) formant le fond (7), les deux coques en plastique (1, 2) ayant été fabriquées par un procédé de moulage par injection, **caractérisé en ce que** l'on prévoit, dans la zone du joint de soudure, des éléments d'écartement (9) venant en butée lors de la soudure, pour conserver un écartement précis entre la paroi de fermeture supérieure (8) et le fond (7).

2. Réservoir de carburant selon la revendication 1, **caractérisé en ce que** les éléments d'écartement (9) sont formés sur la coque en plastique supérieure (1) et/ou sur la coque en plastique inférieure (2).

3. Réservoir de carburant selon les revendications 1 ou 2, **caractérisé en ce que** les éléments d'écartement (9) sont conçus en tant qu'éléments séparés insérables dans les coques en plastique avant le soudage l'une à l'autre.

4. Réservoir de carburant selon au moins l'une des revendications précédentes, **caractérisé en ce que** les éléments d'écartement (9) sont conçus pour réaliser une connexion par engagement positif des coques en plastique (1, 2).

5. Procédé de fabrication d'un réservoir de carburant, dans lequel on fabrique tout d'abord une coque en plastique supérieure (1) et une coque en plastique inférieure (2) au cours d'un procédé de moulage par injection, **caractérisé en ce qu'**ensuite, les coques en plastique (1, 2) sont assemblées l'une sur l'autre en intercalant un élément chauffant (5) dans la zone d'un bord à souder périphérique de chaque coque en plastique (1, 2) puis les bords à souder sont chauffés au moyen de l'élément chauffant (5), en ce qu'après le chauffage des bords à souder, les éléments chauffants (5) sont retirés et les coques en plastique (1, 2) sont ensuite pressées l'une contre l'autre jusqu'à ce que les éléments d'écartement (9) disposés dans le réservoir de carburant soient parvenus en butée.

6. Procédé selon la revendication 5, **caractérisé en ce que** les bords à souder des coques en plastique (1, 2) sont chacun formés par un bord de type bride (3, 4) orienté vers l'extérieur, et en ce que pour la compression l'une contre l'autre des coques en plastique, une pince (6) vient en prise par-dessus les deux bords de type bride (3, 4) en regard.
